# FASCICULE DE BREVET EUROPEEN

(11) **EP 3 720 645 B1**
(45) Date de publication et mention de la délivrance du brevet: **02.02.2022**
(21) Numéro de dépôt: 18808041.0
(22) Date de dépôt: 03.12.2018
(51) Int. Cl.: B23K 31/02, B21C 37/08, B23K 33/00, B60G 7/00, B60G 13/00, B60G 21/00, B60B 35/08, B23K 101/00, B23K 101/04

(54) **PROCEDE DE FIXATION D'UNE PIECE METALLIQUE SUR UN TUBE METALLIQUE OBTENU PAR PLIAGE ET SOUDAGE DE TOLE ; TETE D'ESSIEU CORRESPONDANTE**
VERFAHREN ZUM BEFESTIGEN EINES METALLBAUTEILS AN EINEM DURCH BIEGEN UND SCHWEISSEN VON BLECH ERHALTENEN METALLROHR SOWIE ENTSPRECHENDER ACHSKOPF
METHOD FOR ATTACHING A METAL COMPONENT TO A METAL TUBE OBTAINED BY BENDING AND WELDING SHEET METAL; CORRESPONDING AXLE HEAD

(30) Priorité: 04.12.2017 FR 1761589
(43) Date de publication de la demande: 14.10.2020
(73) Titulaire: RENAULT s.a.s., 92100 Boulogne-Billancourt (FR)
(72) Inventeur: RIFFIER, Bruno, 72210 FILLE SUR SARTHE (FR); GUILLEUX, Jerome, 72700 ST GEORGES DU BOIS (FR); COTTIN, Fabrice, 72220 ST OUEN EN BELIN (FR)
(86) Numéro de dépôt international: PCT/EP2018/083343
(87) Numéro de publication internationale: WO 2019/110503

(56) Documents cités:
- JP-A- H11 115 430
- JP-A- 2009 061 482
- JP-U- H05 272
- US-A- 5 429 423

## Description

L'invention concerne le domaine de la fabrication de châssis de véhicules automobiles.

Plus particulièrement, l'invention concerne un procédé de fixation d'une pièce massive telle qu'une tête d'essieu pour train arrière de véhicule sur un bras tubulaire de type dit « mono-couture », c'est-à-dire obtenu par pliage de tôle métallique et soudure par un cordon simple des lèvres de la tôle pliée suivant une direction sensiblement longitudinale du bras d'une tôle métallique, et d'une tête d'essieu conformément au préambule des revendications 1 et 8 (voir par exemple JP H11 115430 A).

### ARRIERE PLAN TECHNIQUE DE L'INVENTION

Généralement, un véhicule automobile comprend une caisse, des roues reposant sur le sol et un dispositif de suspension reliant la caisse aux roues. Ce dispositif de suspension comprend pour chaque roue un porte fusée de roue sur lequel ladite roue est montée à rotation autour d'un arbre transversal ayant une extrémité filetée, appelé « fusée de roue ».

Le dispositif de suspension comprend aussi un essieu comportant deux bras sensiblement longitudinaux qui portent une pièce massive dite « tête d'essieu », qui est communément soudée sur les bras, elle-même destinée à porter un porte-fusée apte à recevoir la fusée de roue associée à rotation. Les deux bras sont liés par une traverse déformable élastiquement en torsion qui s'étend sensiblement transversalement et qui est solidaire des bras respectifs des deux roues.

Les bras sont traditionnellement formés d'un profilé creux réalisé par formage de tôle et soudage des lèvres de ce profilé suivant un cordon de soudure simple, communément dit « mono-couture », qui s'étend suivant une corde longitudinale du bras. De tels bras tubulaires formés de profilés de tôles permettent d'abaisser le poids et le coût du dispositif de suspension tout en proposant des bras dotés d'une résistance mécanique suffisante pour supporter les contraintes et chocs appliqués aux roues.

Une faiblesse constatée des suspensions du type précédemment décrit réside dans des défaillances potentielles dans la résistance des soudures de liaison des têtes d'essieu sur les bras de suspension, en particulier dans les zones de chevauchement desdites têtes d'essieu sur la jonction des lèvres du profilé de tôle formant les bras et le cordon de soudure de ces lèvres. Les têtes d'essieu, auxquelles sont fixées usuellement les portes-fusée de roue, sont en effet le point d'entrée au châssis des efforts subits par les roues.

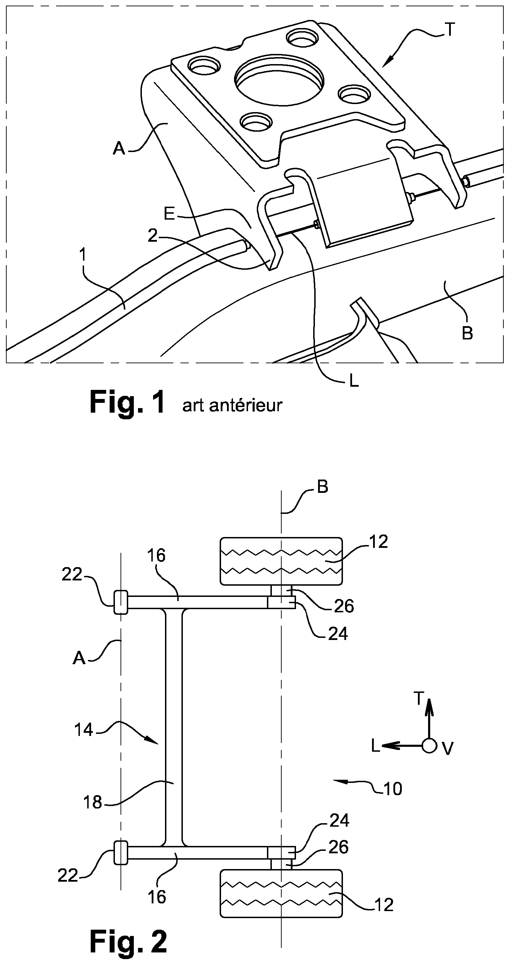

La figure 1 représente en détail une tête d'essieu T soudée sur un bras de suspension B tubulaire tel que pratiqué de l'art antérieur. Ladite tête T comporte des ailes de fixation A munies d'étriers E de positionnement sur le bras B, lesdits étriers E étant tels que la tête T prenne appui par ses ailes sur plus de 50% de la circonférence du bras B en chevauchant la jonction des lèvres L du profilé pour limiter les effets d'écartement des lèvres L sous les efforts appliqués à la tête d'essieu T.

Cependant, ce chevauchement localisé des ailes A de la tête d'essieu T sur la jointure des lèvres L du bras de suspension impose l'interruption dans cette zone de chevauchement du cordon de soudure 2 assurant la liaison des ailes de la tête d'essieu aux bras B pour garantir une tenue mécanique optimale des lèvres L de jointure du bras B ou inversement une interruption du cordon de soudure 1 solidarisant lesdites lèvres L de jointure du bras B au profit d'une continuité du cordon de soudure 2 des ailes A de la tête d'essieu T sur le bras B.

En pratique aucune de ces solutions ne s'avère parfaitement satisfaisante. En effet, une interruption de cordon mono-couture 1 de liaison des lèvres L du bras accentue le phénomène d'augmentation de contraintes localisé dans la zone de chevauchement et provoque des défaillances. L'affaiblissement par usinage (fraisage) dudit cordon mono-couture 1 au profit du cordon de liaison 2 des ailes A de la tête d'essieu T au bras B génère quant à elle un coût de fabrication élevé sans supprimer les défaillances mécaniques du bras B.

Il s'avère donc nécessaire de proposer une solution de liaison par soudure d'une tête d'essieu sur un bras de suspension de véhicule automobile qui ne souffre pas les défauts précédemment évoqués et garantisse à la fois une résistance mécanique optimale de la soudure des lèvres du profilé formant un bras et de la soudure des ailes d'une tête d'essieu sur ledit bras.

### BREF RESUME DE L'INVENTION

La présente invention propose un procédé d'assemblage d'une pièce métallique sur un tube métallique obtenu par déformation d'une tôle et soudure des bords de jointure de ladite tôle suivant un cordon simple de soudure (ci-après également cordon mono-couture) tel que défini dans la revendication 1.

Le procédé de l'invention procure l'avantage, par la réalisation d'un ajourage localisé dans la pièce métallique à assemble au tube métallique, d'offrir une zone d'épanchement du cordon de soudure de la pièce au tube dans la masse de ladite pièce, ce qui permet lors du soudage de créer un point d'ancrage et de renforcement de la liaison pièce-tube dans la zone de plus grande fragilité de l'assemblage, c'est-à-dire la zone de chevauchement de la pièce à la soudure.

Selon une forme de réalisation, l'étape d'ajourage comporte une dépose de matière de la pièce métallique depuis un bord franc de celle-ci.

Selon différente variantes de l'invention, l'étape d'ajourage comporte la formation d'une ouverture débouchante depuis un bord franc de la pièce métallique, notamment par des techniques de découpage (jet d'eau, laser, faisceau d'électrons), d'étampage et/ou d'usinage (fraisage).

Dans un mode de réalisation de l'invention, ladite ouverture présente une profondeur, mesurée selon une direction perpendiculaire à une tangente au bord franc de la pièce métallique depuis lequel elle s'étend, et une largeur, mesurée parallèlement à ladite tangente, supérieures à une plus grande dimension du cordon simple de soudure du tube métallique.

Cette géométrie de l'ouverture ajourée dans la pièce métallique a pour but de permettre un chevauchement complet du cordon simple de soudure du tube sur lequel la pièce métallique est soudée, pour garantir une zone de contact continu sur le bord franc de ladite pièce avec la surface du tube nécessaire à la bonne soudure de la pièce au tube et une bonne tenue mécanique de celle-ci.

Selon une forme de réalisation particulière, ladite ouverture comporte un segment initial reliant ledit bord franc de la pièce métallique à une cavité finale, le segment initial présentant une largeur inférieure à la largeur de la cavité finale.

Selon des variantes de mise en oeuvre de l'invention la cavité finale présente dans un plan médian de la partie de la pièce métallique ajourée une forme géométrique régulière ou quelconque.

Préférentiellement, l'étape de positionnement consiste à positionner ladite pièce métallique en appui stable sur la circonférence du tube tel que ladite ouverture chevauche le cordon simple de soudure du tube.

De plus, l'étape de soudure de la pièce métallique comporte avantageusement la formation d'un cordon de soudure continu suivant la zone de contact continu le long du bord franc de ladite pièce métallique de telle sorte que ledit cordon pénètre et remplisse au moins partiellement ladite ouverture.

La présente invention concerne par ailleurs selon un second objet une tête d'essieu tel que défini dans la revendication 8.

Une telle tête d'essieu dotée d'ouvertures débouchantes dans ses ailes permet une mise en œuvre adéquate du procédé de l'invention précédemment décrit, notamment en procurant une pièce ajourée pour permettre la diffusion d'un cordon de soudure mono-couture dans ladite ouverture sans interruption de celui-ci.

Les ouvertures débouchantes peuvent notamment de préférence présenter une forme générale de section de « clé » ou encore de « trou de serrure ».

Ainsi, selon une forme préférée de réalisation de la tête d'essieu de l'invention, lesdites ouvertures comportent chacune un segment initial reliant un dit bord franc à une cavité finale, le segment initial présentant une largeur, mesurée parallèlement à une tangente au bord franc depuis lequel elle s'étend, inférieure à la largeur de la cavité finale.

De plus, la cavité finale desdites ouvertures présente avantageusement, dans un plan médian des ailes de la tête d'essieu, une forme géométrique régulière, en particulier une forme circulaire ou une forme polyédrique (triangulaire, rectangulaire entre autres). Une telle forme présente l'avantage d'être simple à réaliser par tout procédé d'estampage ou de découpe de pièces métalliques comme la tête d'essieu de l'invention.

L'invention concerne enfin dans un dernier objet un module de construction d'un châssis de véhicule automobile tel que défini dans la revendication 11. Ce module de construction peut par exemple consister, de façon non limitative, en un bras de suspension supportant une tête d'essieu de véhicule automobile, notamment une tête d'essieu telle que précédemment définie.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'une portion de châssis de véhicule automobile, notamment d'un bras de suspension tubulaire supportant une tête d'essieu soudée sur ce bras selon une technique connue de l'art antérieur;
- la figure 2 est une vue analogue à celle de la figure 1 représentant un module de construction d'un dispositif de suspension de véhicule automobile dans lequel une tête d'essieu est soudée sur un bras de suspension tubulaire selon le procédé de l'invention ;

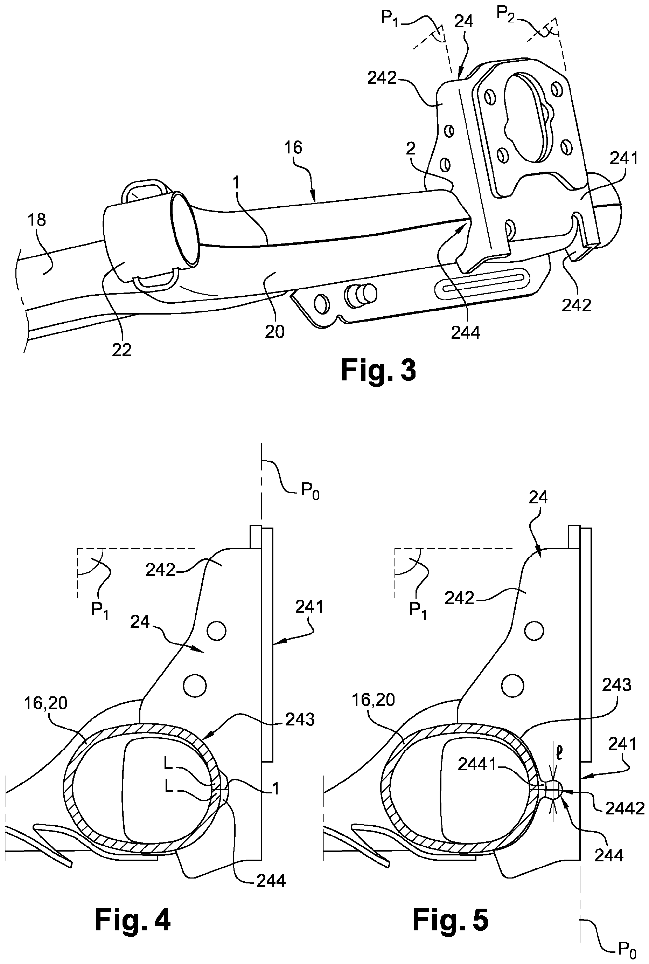

- la figure 3 est une vue en coupe transversale du tube de suspension du module de la figure 2, suivant un plan parallèle P aux ailes de fixation de la tête d'essieu, lesdites ailes comportant une ouverture d'ajourage superposée au cordon de soudure du bras tubulaire ;
- la figure 4 est une vue analogue à celle de la figure 3 dans laquelle l'ouverture d'ajourage des ailes de la tête d'essieu présente une cavité de forme circulaire.

### DESCRIPTION DETAILLEE DES FIGURES

Dans la suite de la description, des éléments présentant une structure identique ou des fonctions analogues seront désignés par des mêmes références.

On a représenté à titre indicatif à la figure 2 un dispositif 10 de suspension pour un train de deux roues 12 arrière indépendantes d'un véhicule automobile. Le dispositif 10 de suspension comporte notamment un essieu 14 arrière qui comporte deux bras 16 d'axe d'orientation globalement longitudinale reliés entre eux par une traverse 18 dont chaque extrémité est liée de manière rigide avec le bras 16 associé, par exemple par soudage. La traverse 18 est souple élastiquement en torsion. Un tel type d'essieu 14 est parfois appelé "essieu semi-rigide" ou "essieu à poutre de torsion". Les propriétés élastiques de la traverse 18 lui permettent notamment de remplir une fonction anti-dévers qui limite le roulis de la carrosserie.

Les deux bras 16 sont identiques par symétrie par rapport à un plan longitudinal vertical médian qui coupe la traverse 18 en son milieu. Par la suite, on ne décrira donc qu'un seul bras 16, la description étant applicable par symétrie à l'autre bras du dispositif.

La présente invention propose de façon avantageuse un procédé d'assemblage d'une pièce métallique 24 telle qu'une tête d'essieu sur un tube métallique tel qu'un dit bras 16 de suspension pour un dispositif de suspension 10 de véhicule automobile représenté à la figure 2.

Le procédé de l'invention s'applique tout particulièrement à la fixation d'une tête d'essieu 24 sur un bras 16 formé par déformation d'une tôle et soudure des bords ou lèvres L de jointure de ladite tôle suivant un cordon simple de soudure, ci-après dénommé dans la présente description cordon mono-couture 1, pour former un corps 20 tubulaire. Le cordon mono-couture 1 s'étend de manière classique en soit longitudinalement audit bras 16, dont le corps 20 présente une rigidité adaptée à son usage tout en étant léger et peu onéreux à fabriquer.

Une extrémité avant du bras 16 est destinée à être montée à rotation autour d'un axe "A" transversal sur une caisse du véhicule automobile. A cet effet, un tronçon d'extrémité avant du bras 16 comporte une articulation 22 élastique. Le bras est ainsi tiré par la caisse du véhicule lorsque ce dernier roule en marche avant.

Un tronçon d'extrémité arrière du bras 16 supporte une tête d'essieu 24 destinée à porter un porte-fusée (non représenté) qui est apte à recevoir une roue 12 associée à rotation autour d'un axe "B" transversal de rotation par l'intermédiaire d'une fusée (non représentée).

La tête d'essieu 24 est formée par une pièce métallique, par exemple d'acier, qui est rapportée et soudée à une extrémité arrière libre du corps 20 du bras 16, lui-même constitué d'acier de préférence.

La tête d'essieu 24 constitue le point d'entrée, via le porte-fusée qu'elle supporte, des efforts et chocs perçus au roulement par la roue 12. Aussi est-elle de préférence réalisée non par formage d'une tôle comme le bras 16 mais d'une pièce forgée et usinée ou, en variante, moulée et usinée. La tête 24 présente une plateforme 241 de montage d'un porte-fusée de roue, ladite plateforme 241 comportant une ouverture centrale d'allègement. De part et d'autre de cette plateforme 241 s'étendent, suivant des plans P1, P2 sensiblement perpendiculaires au plan P0 de la plateforme, deux ailes 242 de fixation de la tête 24 sur le bras 16. Les plans P1, P2 forment un plan médian de chacune des ailes. Ces ailes 242 comportent chacune un bord franc 243, ou bord libre, d'accostage de la tête 24 sur le bras 16. Ces bords francs 243 définissent avantageusement une concavité complémentaire de la convexité de la paroi du bras 16, notamment en forme de « C », ou de « U », de telle sorte que les dits bords francs 243 procurent une surface de contact continu de la tête 24 sur la surface externe du bras 16, sur une longueur d'au moins 35%, de préférence supérieure à 40% de la circonférence dudit bras 16, tout en chevauchant ou recouvrant le cordon mono-couture 1 du bras afin de procurer un effet de tenaille sur celui-ci s'opposant à l'écartement des lèvres jointes par ledit cordon.

Le soudage de la tête 24 au corps 20 du bras 16, traditionnellement réalisé par soudure à l'arc, présente l'inconvénient de requérir le chevauchement de deux cordons simples de soudure, et plus particulièrement du cordon mono-couture 1 du bras 16 et d'un cordon 2 de soudure des ailes 242 de la tête d'essieu 24. De tels chevauchements de cordons de soudure sont délicats à réaliser pour assurer une bonne liaison mécanique cordon 1-cordon 2 sans créer de fragilisation globale de la soudure. Aussi a-t-on jusqu'à présent privilégié, comme représenté sur la figure 1, une continuité du cordon 2 le long du bord franc 243 des ailes 242 au corps du bras 16, au détriment du cordon mono-couture 1, interrompu ou usiné localement pour éviter un chevauchement des cordons. Cependant, cette interruption du cordon mono-couture 1 crée elle aussi un affaiblissement mécanique du bras 16 dans cette zone d'appui de la tête 24, qui tend à favoriser une fissuration du bras 16, notamment par écartement des lèvres de tôle en périphérie du cordon 2 de liaison de la tête 24 au bras 16.

La présente invention procure une solution à ce problème particulier de fragilisation de la zone de croisement et chevauchement des cordons 1, 2. Ainsi l'invention propose un procédé d'assemblage, par soudage, d'une pièce métallique telle que la tête 24, à une pièce tubulaire telle que le bras 16 comportant :
- une étape de positionnement de la tête 24 sur le bras 16 telle que les bords francs 243 des ailes de la tête 24 recouvre la surface externe du bras 16 suivant une zone de contact continu sécante audit cordon mono-couture 1 du bras 16, et
- une étape de soudure de la tête 24 au bras le long de ladite zone de contact continu par formation d'un cordon simple 2 le long du bord franc 243 des ailes reposant sur le bras 16.

Cependant, afin de palier le problème de fragilité de la zone de chevauchement du cordon mono-couture 1 du bras 16 et du cordon simple 2 de liaison de la tête 24 au bras le procédé de l'invention comporte préalablement à l'étape de positionnement de la tête 24, une étape d'ajourage d'une partie des ailes 243 destinée à chevaucher ledit cordon mono-couture 1 du bras 16.

L'étape d'ajourage comporte notamment une dépose de matière des ailes 242 depuis le bord franc 243 de celles-ci, pour former notamment d'une ouverture débouchante 244 depuis ledit bord franc 243. Ladite étape d'ajourage peut selon différente variante résulter d'opération de découpage, par jet d'eau ou laser notamment, d'étampage étampage et/ou d'usinage.

Ainsi, lors de l'opération de soudage de la tête 24 le cordon simple 2 pénètre dans l'ouverture 244 pour former selon la forme de l'ouverture une zone de soudure élargie sur la zone de chevauchement des cordons de soudure 1, 2 et/ou un bouton d'ancrage au sein des ailes 242 pour assurer une bonne fixation de la tête 24 sur le corps 20.

L'ouverture 244 ajourée dans les ailes 242 de la tête d'essieu 24 présente une profondeur, mesurée selon une direction perpendiculaire à une tangente au bord franc 243 depuis lequel elle s'étend, et une largeur I, mesurée parallèlement à ladite tangente, supérieures à une plus grande dimension du cordon mono-couture 1 du bras 16. Ainsi, l'ouverture 244 permet un échappement une répartition effective de la matière de soudure en fusion dans ladite ouverture.

L'ouverture 244 ajourée dans la tête d'essieu 24 peut, tenant compte des paramètres de dimensionnement évoqués ci-avant présenter diverses formes particulières et de préférence notamment une forme de section de « clé » ou de « trou de serrure ». Elle peut notamment ainsi comporter un segment initial 2441 reliant ledit bord franc 243 à une cavité finale 2442, le segment initial présentant une largeur inférieure à la largeur de la cavité finale. La cavité finale 2442 peut par ailleurs, observée dans un plan médian des ailes 242 de la tête d'essieu, présenter une forme géométrique régulière ou quelconque. Une cavité finale 2442 circulaire ou rectangulaire peut notamment constituer une forme de réalisation préférée simple à réaliser lors de la découpe des ouvertures dans les ailes 242.

Le procédé d'assemblage de la présente invention procure l'avantage de renforcer localement la zone de chevauchement des cordons de soudure 1, 2 du bras 16 et de la tête d'essieu sur le corps 20 dudit bras, annulant ainsi la fragilité locale du bras et de l'assemblage ainsi formé. Ce procédé peut en outre s'appliquer à tout assemblage de deux pièces métalliques requérant le chevauchement de cordons de soudures afin de compenser les défaillances possibles découlant d'une interruption ou usinage de l'un des cordons ou d'une moindre tenue des cordons superposés le cas échéant.

L'assemblage d'une tête d'essieu 24 sur un bras de suspension tubulaire 16 formé d'une tôle enroulée et soudée selon le procédé de l'invention permet ainsi de réaliser des modules de châssis pour véhicule automobile légers et robustes, adaptés pour le montage pivotant d'un porte-fusée de roue pour un coût peu élevé.

## Revendications

1. Procédé d'assemblage d'une pièce métallique (24) sur un tube métallique (16) obtenu par déformation d'une tôle et soudure des bords de jointure de ladite tôle suivant un cordon simple de soudure (1) s'étendant longitudinalement audit tube, le procédé étant **caractérisé par** les étapes suivantes :
- une étape de positionnement de la pièce métallique (24) sur ledit tube (16) telle qu'au moins une partie (242, 243) de ladite pièce métallique chevauche ledit tube (16) suivant une zone de contact continu sécante audit cordon simple de soudure (1) du tube, et
- une étape de soudure de la pièce métallique (24) audit tube le long de ladite zone de contact continu. une étape d'ajourage de ladite partie de la pièce métallique (24) destinée à chevaucher ledit cordon de soudure du tube(1) lors des étapes de positionnement et de soudure,

2. Procédé selon la revendication 1, **caractérisé en ce que** l'étape d'ajourage comporte une dépose de matière de la pièce métallique (24) depuis un bord franc (243) de celle-ci.

3. Procédé selon la revendication 1 ou 2, **caractérisé en ce que** l'étape d'ajourage comporte la formation d'une ouverture (244) débouchante depuis un bord franc (243) de la pièce métallique.

4. Procédé selon la revendication 3, **caractérisé en ce que** ladite ouverture (244) présente une profondeur, mesurée selon une direction perpendiculaire à une tangente au bord franc de la pièce métallique depuis lequel elle s'étend, et une largeur (I), mesurée parallèlement à ladite tangente, supérieures à une plus grande dimension du cordon simple de soudure (1) du tube métallique.

5. Procédé selon la revendication 4, **caractérisé en ce que** ladite ouverture (244) comporte un segment initial (2441) reliant ledit bord franc (243) de la pièce métallique à une cavité finale (2442), le segment initial présentant une largeur inférieure à la largeur de la cavité finale.

6. Procédé selon l'une des revendications 3 à 5, **caractérisé en ce que** l'étape de positionnement consiste à positionner ladite pièce métallique (24) en appui stable sur la circonférence du tube (16) tel que ladite ouverture (244) chevauche le cordon simple de soudure (1) du tube.

7. Procédé selon l'une des revendications 3 à 6, **caractérisé en ce que** l'étape de soudure de la pièce métallique (24) comporte la formation d'un cordon de soudure (2) continu suivant la zone de contact continu le long du bord franc (243) de ladite pièce métallique de telle sorte que ledit cordon (2) pénètre et remplisse au moins partiellement ladite ouverture (244).

8. Tête d'essieu (24), comportant une plateforme (241), de part et d'autre de laquelle deux ailes (242) de fixation comportant chacune un bord franc (243) d'accostage de la tête d'essieu (24) sur un bras de suspension (16), **caractérisé en ce que** lesdites ailes (242) comportent chacune une ouverture débouchante (244) depuis ledit bord franc (243).

9. Tête d'essieu (24) selon la revendication 8, **caractérisée en ce que** lesdites ouvertures (244) comportent chacune un segment initial (2441) reliant ledit bord franc (243) à une cavité finale (2442), le segment initial présentant une largeur, mesurée parallèlement à une tangente au bord franc (243) depuis lequel elle s'étend, inférieure à la largeur de la cavité finale.

10. Tête d'essieu (24) selon la revendication 9, **caractérisée en ce que** la cavité finale (2442) desdites ouvertures présente, dans un plan médian (P1, p2) des ailes (242) de la tête d'essieu, une forme géométrique régulière, en particulier une forme circulaire ou une forme polyédrique.

11. Module de construction d'un châssis de véhicule automobile comportant une pièce métallique (24) assemblée sur un tube métallique (16) selon le procédé des revendications 1 à 7, le module comprenant un tube métallique (16) obtenu par déformation d'une tôle et soudure des bords de ladite tôle suivant un cordon simple de soudure (1) s'étendant longitudinalement audit tube (16) et une pièce métallique (24), la pièce métallique (24) ayant au moins une partie (242, 243) chevauchant ledit tube (16) suivant une zone de contact continu audit cordon simple de soudure (1), la pièce métallique (24) étant soudée au tube (16) le long de ladite zone de contact continu, avec une ouverture débouchante depuis ledit bord franc (243) chevauchant ledit cordon de soudure (1).

12. Module de construction d'un châssis de véhicule automobile selon la revendication 11, **caractérisé en ce que** la pièce métallique est une tête d'essieu selon l'une des revendications 8 à 10.

## Patentansprüche

1. Verfahren zum Fügen eines Metallbauteils (24) an ein Metallrohr (16), das durch Verformen eines Blechs und Schweißen der Verbindungskanten des Blechs gemäß einer sich längs an dem Rohr erstreckenden einfachen Schweißnaht (1) erhalten wird, wobei das Verfahren durch die folgenden Schritte gekennzeichnet ist:
- einen Schritt des Aussparens des Teils des Metallbauteils (24), der dazu bestimmt ist, die einfache Schweißnaht des Rohrs (1) bei den Schritten des Positionierens und Schweißens zu überdecken,
- einen Schritt des Positionierens des Metallbauteils (24) an dem Rohr (16) derart, dass mindestens ein Teil (242, 243) des Metallbauteils das Rohr (16) gemäß einem durchgehenden Kontaktbereich, der die einfache Schweißnaht (1) des Rohrs schneidet, überdeckt, und
- einen Schritt des Schweißens des Metallbauteils (24) an das Rohr entlang des durchgehenden Kontaktbereichs.

2. Verfahren nach Anspruch 1, **dadurch gekennzeichnet, dass** der Schritt des Aussparens ein Entfernen von Material des Metallbauteils (24) von einer freien Kante (243) von diesem aus umfasst.

3. Verfahren nach Anspruch 1 oder 2, **dadurch gekennzeichnet, dass** der Schritt des Aussparens das Bilden einer durchgehenden Öffnung (244) von einer freien Kante (243) des Metallbauteils aus umfasst.

4. Verfahren nach Anspruch 3, **dadurch gekennzeichnet, dass** die Öffnung (244) eine Tiefe, gemessen in einer Richtung senkrecht zu einer Tangente an der freien Kante des Metallbauteils, von der aus sie sich erstreckt, und eine Breite (l), gemessen parallel zu der Tangente, aufweist, die größer als ein größtes Maß der einfachen Schweißnaht (1) des Metallrohrs sind.

5. Verfahren nach Anspruch 4, **dadurch gekennzeichnet, dass** die Öffnung (244) ein Anfangssegment (2441), das die freie Kante (243) des Metallbauteils mit einem Endhohlraum (2442) verbindet, umfasst, wobei das Anfangssegment eine Breite aufweist, die geringer als die Breite des Endhohlraums ist.

6. Verfahren nach einem der Ansprüche 3 bis 5, **dadurch gekennzeichnet, dass** der Schritt des Positionierens darin besteht, das Metallbauteil (24) in stabiler Auflage auf dem Umfang des Rohrs (16) derart zu positionieren, dass die Öffnung (244) die einfache Schweißnaht (1) des Rohrs überdeckt.

7. Verfahren nach einem der Ansprüche 3 bis 6, **dadurch gekennzeichnet, dass** der Schritt des Schweißens des Metallbauteils (24) das Bilden einer durchgehenden Schweißnaht (2) gemäß dem durchgehenden Kontaktbereich entlang der freien Kante (243) des Metallbauteils umfasst, so dass die Naht (2) in die Öffnung (244) eindringt und sie zumindest teilweise füllt.

8. Achskopf (24), umfassend eine Plattform (241), zu deren beiden Seiten zwei Befestigungsflügel (242), umfassend jeweils eine freie Kante (243) zum Ankoppeln des Achskopfes (24) an einen Lenker (16), **dadurch gekennzeichnet, dass** die Flügel (242) jeweils eine durchgehende Öffnung (244) von der freien Kante (243) aus umfassen.

9. Achskopf (24) nach Anspruch 8, **dadurch gekennzeichnet, dass** die Öffnungen (244) jeweils ein Anfangssegment (2441) umfassen, das die freie Kante (243) mit einem Endhohlraum (2442) verbindet, wobei das Anfangssegment eine Breite, gemessen parallel zu einer Tangente an der freien Kante (243), von der aus es sich erstreckt, aufweist, die geringer als die Breite des Endhohlraums ist.

10. Achskopf (24) nach Anspruch 9, **dadurch gekennzeichnet, dass** der Endhohlraum (2442) der Öffnungen, in einer Mittelebene (P1, p2) der Flügel (242) des Achskopfes, eine regelmäßige geometrische Form aufweist, insbesondere eine kreisförmige Form oder eine polyedrische Form.

11. Konstruktionsmodul eines Kraftfahrzeugfahrgestells, umfassend ein Metallbauteil (24), das nach dem Verfahren der Ansprüche 1 bis 7 an ein Metallrohr (16) gefügt ist, wobei das Modul ein Metallrohr (16), das durch Verformen eines Blechs und Schweißen der Kanten des Blechs gemäß einer sich längs an dem Rohr (16) erstreckenden einfachen Schweißnaht (1) erhalten wird, und ein Metallbauteil (24) beinhaltet, wobei das Metallbauteil (24) mindestens einen Teil (242, 243) besitzt, der das Rohr (16) gemäß einem durchgehenden Kontaktbereich an der einfachen Schweißnaht (1) überdeckt, wobei das Metallbauteil (24) an das Rohr (16) entlang des durchgehenden Kontaktbereichs geschweißt ist, mit einer durchgehenden Öffnung von der freien Kante (243) aus, welche die Schweißnaht (1) überdeckt.

12. Konstruktionsmodul eines Kraftfahrzeugfahrgestells nach Anspruch 11, **dadurch gekennzeichnet, dass** das Metallbauteil ein Achskopf nach einem der Ansprüche 8 bis 10 ist.

## Claims

1. Method for assembling a metal part (24) on a metal tube (16) obtained by deformation of a metal sheet and welding of the joining edges of said sheet along a single weld bead (1) extending longitudinally to said tube, the method being **characterized by** the following steps:
- a step of positioning the metal part (24) on said tube (16) such that at least a part (242, 243) of said metal part overlaps said tube (16) in a continuous contact zone secant to said single weld bead (1) of the tube, and
- a step of welding the metal part (24) to said tube along said continuous contact zone,
- a step of cutting out said part of the metal part (24) intended to overlap said weld bead of the tube (1) during the positioning and welding steps.

2. Method according to Claim 1, **characterized in that** the cutting-out step comprises a removal of material of the metal part (24) from a raw edge (243) thereof.

3. Method according to Claim 1 or 2, **characterized in that** the cutting-out step comprises the formation of a through opening (244) from a raw edge (243) of the metal part.

4. Method according to Claim 3, **characterized in that** said opening (244) has a depth, measured in a direction at right angles to a tangent to the raw edge of the metal part from which it extends, and a width (1), measured parallel to said tangent, that are greater than a greater dimension of the single weld bead (1) of the metal tube.

5. Method according to Claim 4, **characterized in that** said opening (244) comprises an initial segment (2441) linking said raw edge (243) of the metal part to a final cavity (2442), the initial segment having a width less than the width of the final cavity.

6. Method according to one of Claims 3 to 5, **characterized in that** the positioning step consists in positioning said metal part (24) stably bearing on the circumference of the tube (16) such that said opening (244) overlaps the single weld bead (1) of the tube.

7. Method according to one of Claims 3 to 6, **characterized in that** the step of welding the metal part (24) comprises the formation of a continuous weld bead (2) in the continuous contact zone along the raw edge (243) of said metal part such that said bead (2) penetrates into and at least partially fills said opening (244) .

8. Axle head (24), comprising a platform (241), on either side of which two fixing wings (242) each comprising a raw edge (243) for docking the axle head (24) on a suspension arm (16), **characterized in that** said wings (242) each comprise a through opening (244) from said raw edge (243).

9. Axle head (24) according to Claim 8, **characterized in that** said openings (244) each comprise an initial segment (2441) linking said raw edge (243) to a final cavity (2442), the initial segment having a width, measured parallel to a tangent to the raw edge (243) from which it extends, less than the width of the final cavity.

10. Axle head (24) according to Claim 9, **characterized in that** the final cavity (2442) of said openings has, in a median plane (P1, p2) of the wings (242) of the axle head, a regular geometrical form, in particular a circular form or a polyhedral form.

11. Module for constructing a motor vehicle chassis comprising a metal part (24) assembled on a metal tube (16) according to the method of Claims 1 to 7, the module comprising a metal tube (16) obtained by deformation of a metal sheet and welding of the edges of said metal sheet along a single weld bead (1) extending longitudinally to said tube (16) and a metal part (24), the metal part (24) having at least a part (242, 243) overlapping said tube (16) in a continuous contact zone to said single weld bead (1), the metal part (24) being welded to the tube (16) along said continuous contact zone, with a through opening from said raw edge (243) overlapping said weld bead (1).

12. Module for constructing a motor vehicle chassis according to Claim 11, **characterized in that** the metal part is an axle head according to one of Claims 8 to 10.
